# EUROPEAN PATENT SPECIFICATION

(11) **EP 0 888 153 B1**
(45) Date of publication and mention of the grant of the patent: **12.07.2000**
(21) Application number: 97916849.9
(22) Date of filing: 19.03.1997
(51) Int. Cl.: A62D 3/00

(54) **METHOD FOR HOT AND SUPERCRITICAL WATER OXIDATION OF MATERIAL USING SPECIFIC REACTANTS**
VERFAHREN FÜR WARM UND SUPERKRITISCHE WASSEROXIDATION VON SPEZIFISCHEN REAKTANDEN VERWENDENEN MATERIALIEN
PROCEDE D'OXYDATION D'UNE MATIERE A CHAUD ET PAR LIQUIDE SUPERCRITIQUE AU MOYEN DE REACTIFS SPECIFIQUES

(30) Priority: 22.03.1996 US 621746; 15.04.1996 US 632604
(43) Date of publication of application: 07.01.1999
(73) Proprietor: SRI INTERNATIONAL, Menlo Park, California 94025-3493 (US)
(72) Inventor: ROSS, David, S., Palo Alto, CA 94303 (US); JAYAWEERA, Indira, Fremont, CA 94555 (US); BOMBERGER, David, C., Belmont, CA 94002 (US); LEIF, Roald, N., San Francisco, CA 94122 (US)
(74) Representative: West, Alan Harry
(86) International application number: PCT/US97/04443
(87) International publication number: WO 97/34660

(56) References cited:
- WO-A-93/00304
- WO-A-95/19323
- US-A- 5 075 017
- CHEMICAL ENGINEERING PROGRESS SUPPLEMENT 2, vol. 91, no. 4, 1995, NEW YORK, page 10-18 XP000498947 C.M.CARUANA: "Supercritical Water Oxidation aims for wastewater cleanup"
- DATABASE WPI Section Ch, Week 9150 Derwent Publications Ltd., London, GB; Class B05, AN 91-364983 XP002034201 & JP 03 244 361 A (SHOKUHIN SANGYO HIGH SEPARATION SYSTEM) , 31 October 1991

## Description

### Field of the Invention:

The present invention relates to a novel method for the hot and supercritical water oxidation and decomposition of materials, such as waste, particularly halogenated organic compounds, using a specific reactant, e.g., a carbonate or a bicarbonate. The reaction rate is accelerated, salt deposition on the walls of reaction equipment is eliminated, the formation of acid gases is avoided, and the usual corrosion of the metal reactors and lines under the operating conditions is eliminated or is greatly reduced.

### Description of the Problems and the Related Art:

In the past, a number of alternatives to incineration have been used to convert materials which are hazardous or toxic to products which are innocuous or are environmentally friendly, or to intermediates which can be further degraded using existing secondary material treatment methods. Some alternative practices which have been used include, for example, supercritical water oxidation (SCWO), wet air oxidation, molten salt oxidation, plasma arc disposal, hydrothermal liquid oxidation, molten metal pyrolysis, and the like. None has achieved its promise although SCWO has been developed to a considerable degree.

A suitable incineration alternative is still being sought. The U.S. chemical industry generates about 1.5 billion tons (short) of hazardous waste each year. This compares to the aggregate of 365 million tons of product production of the 50 largest volume chemical products, or a remarkable 4 tons of hazardous waste per ton of actual product. A large portion of this waste discharge is organic in nature, and a suitable incineration-free means for its treatment remains a major challenge to the technical community. The problem includes 600,000 tons of chlorinated waste each year, which is incinerated in certified incinerators. These incineration units are expensive to operate, and are subject to continuing serious questions of environmental impact of the effluent gases produced.

In the military arena, the long-standing question of the safety and public acceptance of incineration for the destruction of chemical weapons is under intense scrutiny. The magnitude of the problem is significant. It is estimated that 31,000 tons of mustard gas agents and nerve gas agents are stored in several U.S. Army installations around the country. An existing incinerator in Utah and one under construction in Oregon are being opposed by large public groups.

In the international arena, the government of Japan is committed to rid China of immense quantities of war gases abandoned there by the Japanese over 50 years ago. It is estimated that some 2 million canisters of poison gases are scattered around China in various stages of decay. The use of incineration is being seriously questioned by Japanese authorities.

Halogenated organic compounds and their waste pose a particular hazardous, toxic and/or environmental threats. They are usually stable to natural decomposition and their range of toxicity has recently been broadened to include endocrine disruption. Polychlorinated biphenyls, once having many uses, are highly resistant to decomposition by environmental forces, are persistent, and may enter and concentrate in the food chain with disastrous results. Similarly, polybrominated biphenyls, used particularly as flame retardants in plastics and polymers over the years, present a serious disposal problem. The destruction of halogenated compounds by incineration is highly regulated and limited in the U.S. because the products of incineration, unless rigorously scrubbed, contribute to acid rain, and include chlorodioxins, which are highly toxic.

SCWO is one of the more acclaimed incineration alternatives and has been broadly promoted as a widely applicable, environmentally acceptable means of destruction of hazardous waste, including halogenated waste. However, critical problems related to the technology, including severe corrosion by acid gases and brines, the need for high temperatures and pressures, and salt deposition on critical reactor elements have not been overcome (Broido, J., National Defense. March 1996). The severity and impact of these problems is reflected in the lengths to which those designing SCWO have gone to avoid them. Efforts have been launched with platinum-lined reactors, diamond-coated reactors, ceramic-coated reactors, and reactors with complex mechanical features and other moving parts to minimize corrosion difficulties. After more than 15 years of directed research and development, conspicuous limits in the range of wastes that SCWO can handle, and the levels to which it can be scaled to commercial size remain. SCWO is yet to be recognized as a major replacement for incineration.

Some specific references include the following:

S.V. Hossain et al., in US 5,075,017A, disclose a method for removing polychlorinated benzodioxans and polychlorinated dibenzofurans from paper mill sludge under supercritical or near supercritical conditions.

G. T. Hong et al., in US 5,492,634A, disclose a method for treating halogenated hydrocarbons prior to hydrothermal oxidation using aqueous alkali to neutralize the halogen produced.

G. T. Hong et al., in US 5,358,645A, disclose zirconium oxide ceramics for surfaces exposed to high temperature water oxidation environments.

M. Modell, in US4,338,199, describes supercritical water oxidation of waste at temperatures of 350 to 600°C.

M. Modell, in US4,543,190A, discloses the treatment of various chlorinated organics other than dioxins with supercritical water, and states that conversion of these materials to chlorinated dibenzodioxins was not observed.

N.L. Dickenson, in US4,380,960A, discloses a pollution-free low temperature slurry combustion process using the supercritical state by addition of an alkali and water vapor.

W.C. McCarthy et al., in US4,115,264A, disclose a method for purifying water by contacting the water with an oxidant and an alkali metal.

K.C. Swallow et al.. in US5,232,604A, disclose a process for oxidation of materials in supercritical water utilizing reaction rate enhancers.

The use of supercritical water oxidation conditions to treat organic waste materials is disclosed in WO 81-A-00854A, in Modell, US4,113,466A, in Burleson, US4,564,458A and in Tilmar, US4,594,164A.

Additional references include: L. Jin et al. (1992), "Catalytic Supercritical Water Oxidation of 1,4-Dichlorobenzene," Chem. Eng. Sci., Vol. 47, pp. 2659-2664; N. Keevil (1942), "Vapor Pressure of Aqueous Solutions at High Temperatures," J.Am. Chem. Soc., Vol. 64, pp. 841-850; J. Meyer et al. (1995), "Acetic Acid Oxidation and Hydrolysis in Supercritical Water," AlChE Journal, Vol. 41, pp. 2108-2121; and G. Morey et al. (1956), "Pressure-Temperature Curves in Some Systems Containing Water and a Salt," J. Am. Chem. Soc., Vol. 78, pp. 4249-4252.

D.S. Ross et al., in U.S. Patent No. 5,409,617, disclose the hydrothermal oxidation of wastes using certain salts wherein liquid water is always present.

P. Savage, et al. (1991), "Phenol Oxidation In Supercritical Water: Formation of Dibenzofuran, Dibenzo-p-dioxin, and Related Compounds," Environ, Sci. Technol., Vol. 25, pp. 1507-1510.

M. Modell et al., in WO93 00304A, describe a SCWO process which employs a pressurized reaction mixture flowing through a tubular reactor at a rate effective to prevent settling of solids from the reaction mixture.

It is apparent that a need exists to overcome slow reaction times, the severe reaction conditions of decomposition of materials, particularly halogenated organic compounds, and the deposition of corrosive and plugging salts on critical reaction parts, while at the same time eliminating the formation of corrosive acid gases.

### SUMMARY OF THE INVENTION

The present invention relates to a process for the decomposition of material which is selected from the group consisting of organic compounds, inorganic compounds, or combinations thereof to compounds which are environmentally acceptable, or are amenable to further degradation by conventional disposal systems to produce environmentally acceptable products, which process includes:
(a) conveying an aqueous solution or an aqueous slurry of material into a reaction zone capable of withstanding the temperatures and pressures of decomposition of the material;
(b) contacting the material, in the presence of water, with a specific reactant present as a solid in an amount effective to decompose the material under hot or supercritical water oxidation conditions, said conditions including a reaction temperature of between 300 and 450°C, and a reaction pressure of between 10 and 400 atmospheres about 1 to 40.5 MPa),
   wherein the specific reactant is at least about 90% insoluble in an aqueous medium at said hot or supercritical water oxidation conditions, and reacts to neutralize any acid gases produced in the decomposition,
   said contacting being carried out, in the presence of a gaseous oxidant, for a reaction time sufficient to convert about 99% or greater of the material to compounds which are environmentally acceptable or to compounds which are amendable to further degradation; and
(c) optionally degrading further the compounds produced in step (b) by a secondary reaction to environmentally acceptable products.

In a preferred embodiment the specific reactant is an inorganic salt, which at hydrothermal oxidation conditions is insoluble in the fluid medium, having about 10% solubility or less of the solubility compared to the solubility of the salt at ambient conditions; serves as a site for separation of sodium chloride, sodium sulfate, and other salts formed from the reaction of the organic feed with the specific reactant; prevents formation of acid gases; and substantially accelerates the oxidation rates.

In another embodiment, the materials of construction of the reaction zone, i.e., in the reactor, are corroded (or decomposed) at about 0.1 % by weight or less under the hydrothermal oxidation conditions, preferably about 0.01 % or less, and more preferably about 0.001 % or less per year.

In another embodiment, the material, e.g. waste, comprises at least one organic compound which is present in about 90 percent by weight or greater of the total material.

In another embodiment, at least one organic compound comprises a halogenated organic compound, and
the process occurs with less than 0.1 by weight percent corrosion (or decomposition) of the materials of construction of the reaction zone per year of operation.

In another embodiment, in step (b), the temperature is between 350° and 450°C and the pressure is between 10 and 400 atmospheres about 1 to 40.5 MPa), and the time of reaction is between 0.1 and 120 min.

In another embodiment, the preferred temperature is between about 373 and 400°C, and the pressure is between 100 and 300 atm about 10.1 to 30.4 MPa).

In yet another embodiment the specific reactant is selected from the group consisting of sodium carbonate, calcium carbonate, magnesium carbonate, sodium bicarbonate, calcium bicarbonate, magnesium bicarbonate, mixtures thereof, and the like. Sodium carbonate, calcium carbonate and magnesium carbonate are preferred. Sodium carbonate is more preferred.

In another embodiment, the material is selected from halogenated organic compounds, phosphorus-containing organic compounds, sulfur-containing organic compounds, nitrogen containing compounds or combinations thereof.

In another embodiment, the present invention concerns a process for the decomposition of material selected from halogenated organic compounds to compounds which are environmentally acceptable, or are amenable to further degradation by conventional disposal systems to produce environmentally acceptable products, which process includes:
(a) conveying an aqueous solution or an aqueous slurry of material into a reaction zone capable of withstanding the temperatures and pressures of decomposition of the material;
(b) contacting the material, in the presence of water, with a specific reactant present as a solid in an amount effective to decompose the material under hot or supercritical water oxidation conditions, said conditions including a reaction temperature of between 300 and 400°C and a reaction pressure of between 10 and 400 atmospheres (about 1 to 40.5 MPa),
   wherein the specific reactant is at least about 90% insoluble in an aqueous medium at said hot or supercritical water oxidation conditions, and reacts to neutralize any acid gases produced in the decomposition,
   said contacting being carried out, in the presence of a gaseous oxidant, for a reaction time sufficient to convert about 99% or greater of the material to compounds which are environmentally acceptable or to compounds which are amendable to further degradation; and
(c) optionally degrading further the compounds produced in step (b) by a secondary reaction to environmentally acceptable products.

The following embodiments concern halogenated organic compounds selected from chlorofluorocarbons, chlorobenzodioxins, polychlorobiphenyl, polybromobiphenyl or mixtures thereof. Polychlorobiphenyls are preferred as feed material.

In a preferred embodiment, the specific reactant is an inorganic salt which at hydrothermal oxidation conditions is insoluble in the fluid medium having about 10% solubility or less of the solubility compared to the solubility of the salt at ambient conditions; serves as a site for separation of sodium chloride, sodium sulfate, and other salts formed from the reaction of the organic feed with the specific reactant; prevents formation of acid gases; and substantially accelerates the oxidation rates.

In another embodiment, the materials of construction of the reaction zone, i.e., in the reactor, are corroded (or decomposed) at the contact points (or surfaces) with the reaction at elevated temperatures at about 0.1 % by weight or less under the hydrothermal oxidation conditions, preferably about 0.01 % or less, and more preferably about 0.001 % by weight or less per year.

In another embodiment, the material, e.g., wastes, comprises at least one halogenated organic compound which is present in about 90 percent by weight or greater of the total feed material.

In another embodiment, at least one halogenated organic compound comprises an aromatic halogenated organic compound, and
the process occurs with less than 0.1 percent by weight corrosion (or decomposition) of the materials of construction of the reaction zone per year.

In another embodiment, in step (b), the temperature is between 350° and 400°C and the pressure is between 10 and 400 atmospheres (about 1 to 40.5 MPa), and the time of reaction is between 0.01 and 120 min, preferably, between 0.01 and 20 min, more preferably between 0.1 and 20 min.

In another embodiment, the preferred temperature is between about 373 and 400°C, and the pressure is between 100 and 300 atm (about 10.1 to 30.4 MPa).

In another embodiment, the halogenated organic compound is selected from polychlorinated biphenyl, polybrominated biphenyl or mixtures thereof. Polychlorinated biphenyl is preferred.

### BRIEF DESCRIPTION OF THE FIGURES

Figure 1 A is a graphic representation of the solubility of NaCI in water as a function of pressure and temperature, showing the conventional SCWO operating region and the operating region of the present invention.

Figure 1 B is a graph describing the solubility behavior of sodium chloride (soluble) and specific reactant, e.g. sodium carbonate, in water with increasing temperature, showing that sodium carbonate is about 90% insoluble at 300 and essentially insoluble at or above the critical temperature of water (373°C).

Figure 2 is a schematic representation of one embodiment of the present hot water and SCWO oxidation.

Figure 3 is a drawing showing, on the left side, the corrosion and failure of a pipe during conventional SCWO of dichlorobenzene at 374°C, having 0.12 Molar of p-dichlorobenzene and 0.72 Molar of oxygen, and, on the right side, the lack of corrosion in a pipe undergoing a sodium carbonate (3 g) (0.5 M or 1.4 X 10⁻³ moles in 3mL) assisted hydrothermal oxidation of p-dichlorobenzene under the same conditions.

Figure 4 is a schematic representation of another embodiment of the present hot water and SCWO oxidation.

Figure 5 is a graphic representation of the percent of dichlorobenzene destroyed under supercritical water oxidation conditions at 380°C for specific times of reaction.

Figure 6 is a graphic representation of the decomposition of hexachlorobenzene at 380°C with sodium carbonate, with and without water present.

Figure 7 is a graph of the temperature vs. time heating profile for the decomposition of polychlorinated biphenyl model compounds at 380°C, using a 4.20 cm³ tube reactor at 380°C, showing 5 min, 15 min and 45 min reactions.

Figures 8A, 8B, 8C, 8D and 8E show gas chromatographic traces of samples having PCB levels of 25.0, 12.5, 5.0, 2.5 and 1.0 µg/L, respectively.

Figures 9A, 9B, 9C and 9D show gas chromatographic traces for various reaction products, as follows:

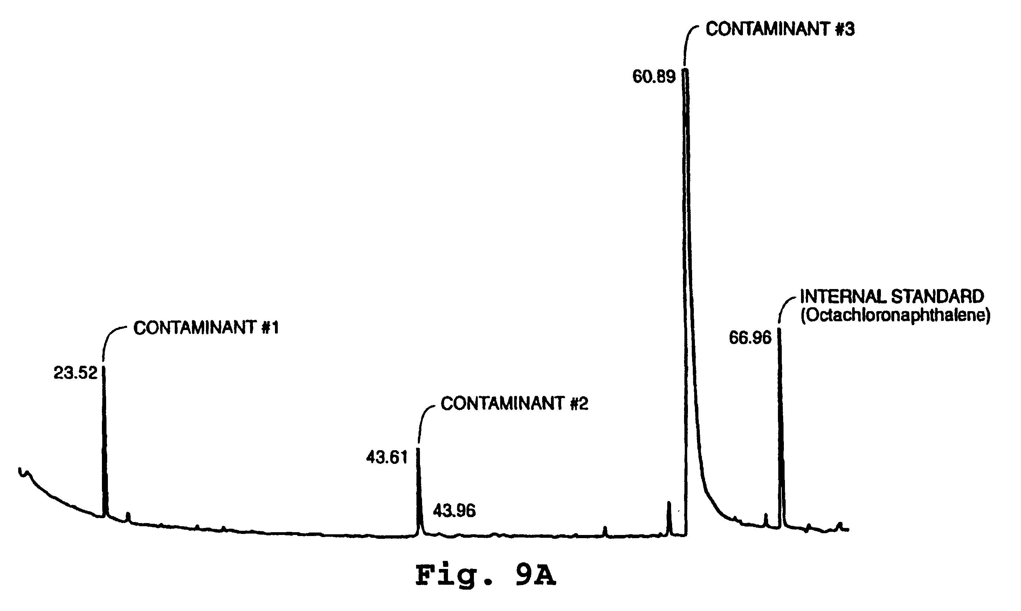

Figure 9A is the result of a method blank showing contaminants.

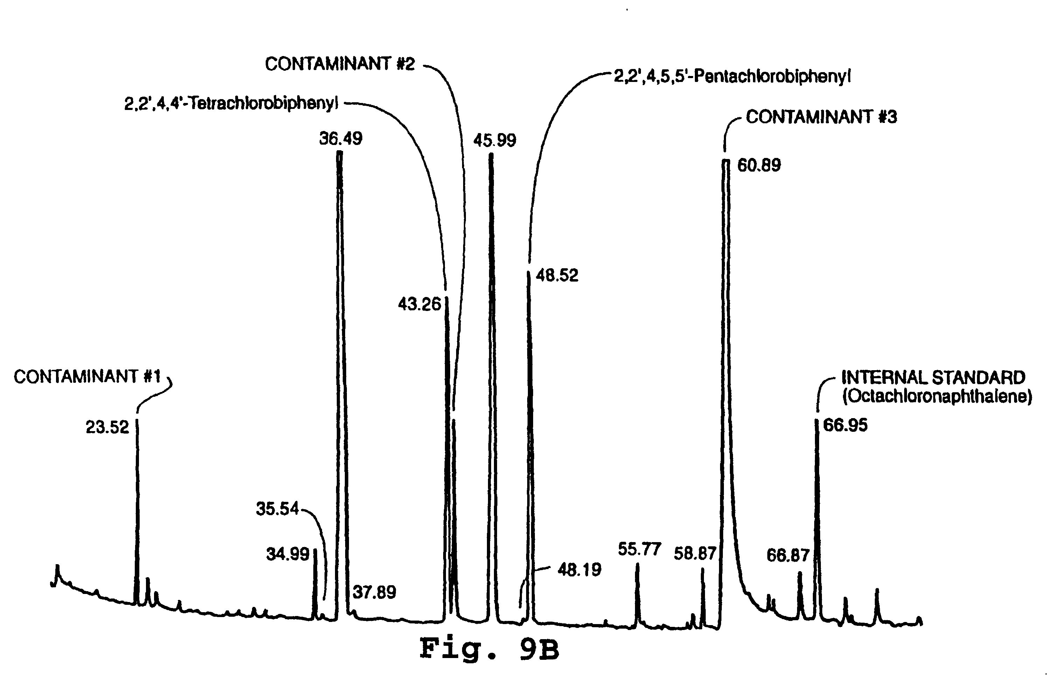

Figure 9B shows the experimental result of a 5 min reaction at 380°C of water only, having an initial PCB level of 200 µg/L.

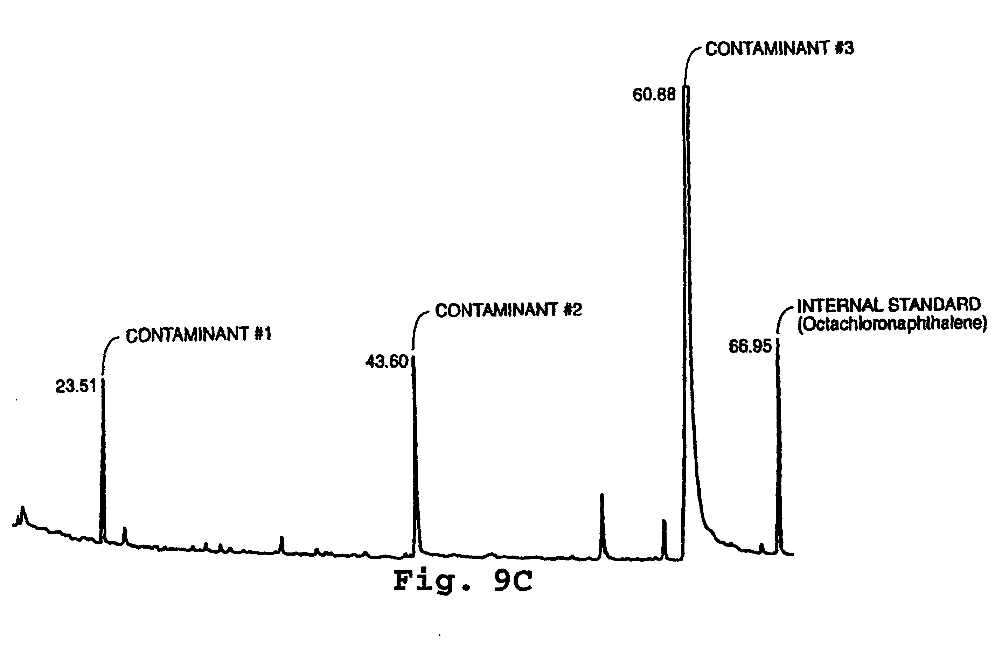

Figure 9C shows the result of a 5 min reaction at 380°C for water and sodium carbonate (500 mg) having an initial PCB level of 200 µg/L.

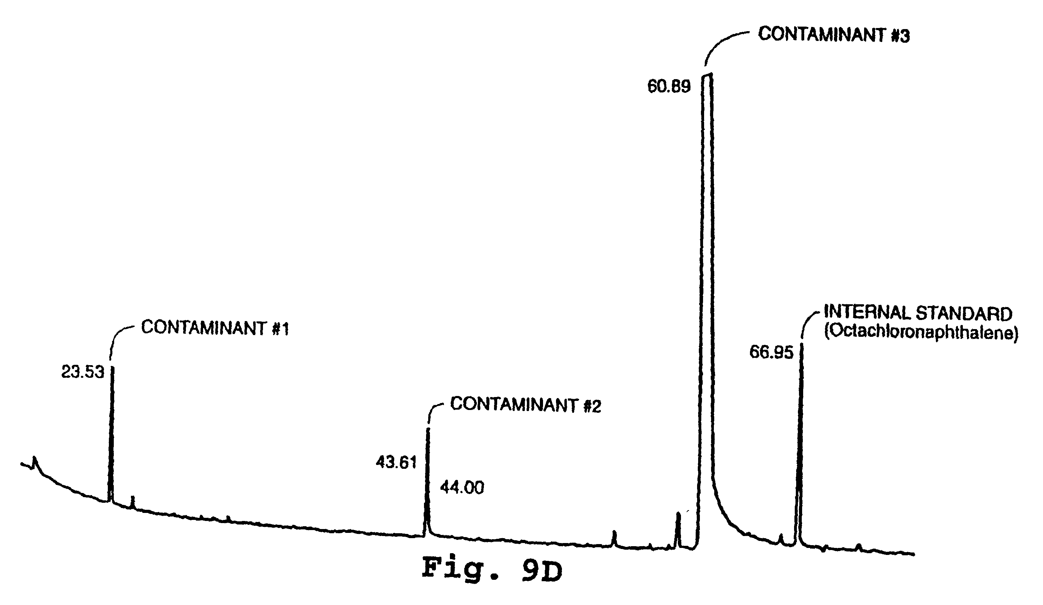

Figure 9D shows the result of a 5 min reaction at 380°C for water and sodium carbonate (500 mg) having an initial PCB level of 20,000 µg/L.

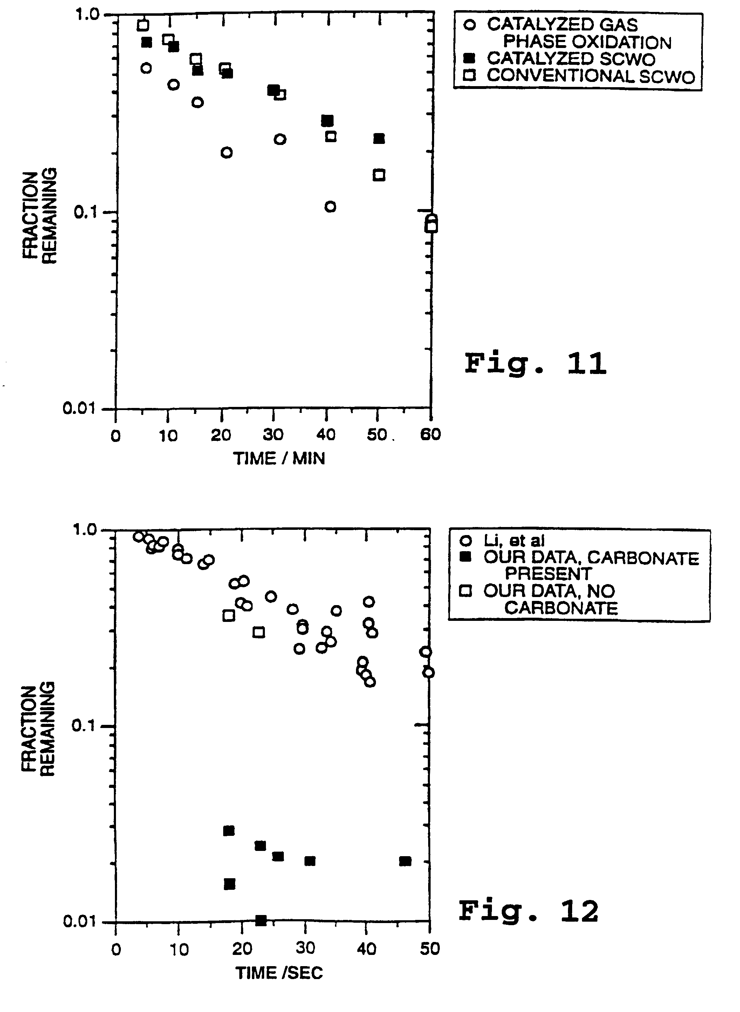

Figure 10 is an enlargement of a portion of Figure 9D which shows the remaining PCB level to be about or less than 1 µg/L.

Figure 11 is a graphic representation of the decomposition of dichlorobenzene according to L. Jin et al. Chem. Eng. Sci, Vol. 47, 2659 (1992).

Figure 12 is a graphic representation comparing data from the supercritical water oxidation of chlorophenol at 380°C of R. Li et al, AlChE Journal, Vol. 39, p. 178 (1993), and the present invention.

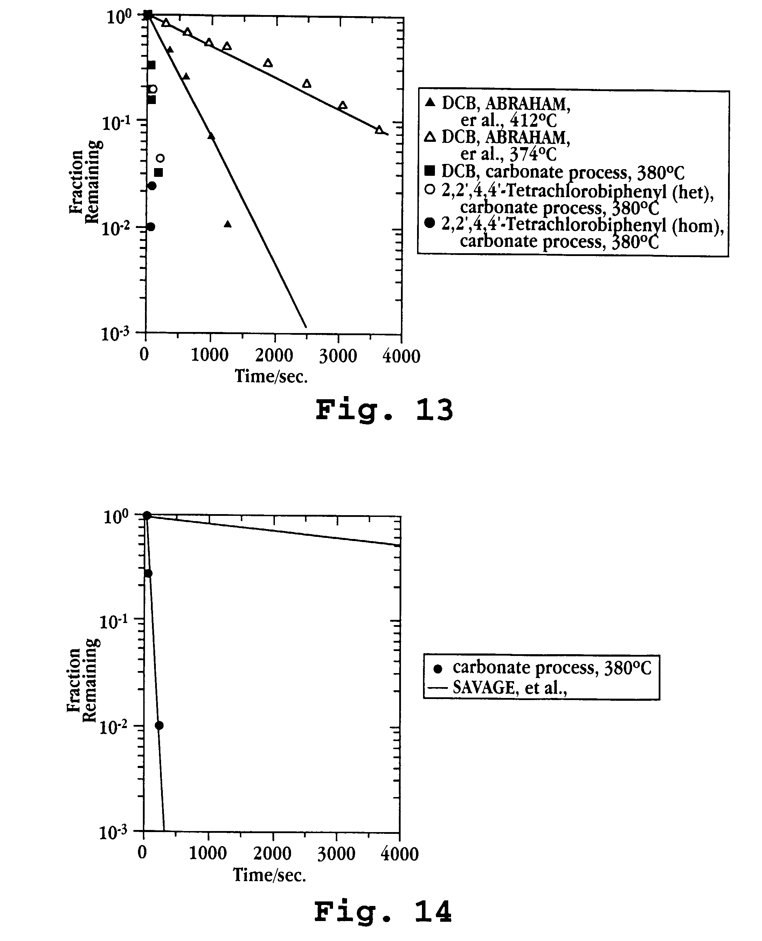

Figure 13 is a graphic representation comparing data from Abraham et al, Chem. Eng. Sci, Vol. 47, 2659 (1992) and data from the present invention.

Figure 14 is a graphic representation of supercritical water oxidation of acetic acid data at 380°C comparing research by Savage et al, Eng. Sci. and Technol., Vol. 29, 216 (1995) and the present invention.

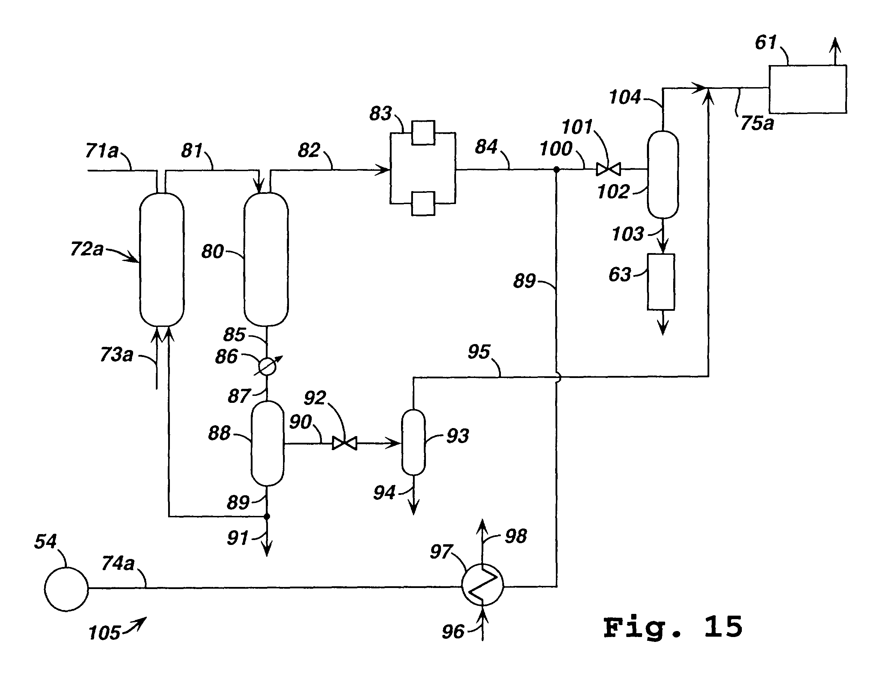

Figure 15 is schematic representation of one embodiment of assisted hydrothermal oxidation with halide recovery.

Figure 16 is a graphic representation of the destruction of acetic acid, methylphosphonic acid, dichlorobenzene and PCB at 380°C, showing the fraction remaining versus time in seconds.

### DETAILED DESCRIPTION OF THE INVENTION AND PREFERRED EMBODIMENTS Definitions

As used herein:

"CFC" refers to chlorofluorocarbons, preferably those CFCs which are used in the refrigerator or air conditioning (home, office, plant/manufacturing facility, or motor vehicle). The commercial CFCs include but are not limited to volatile substituted methane or ethane, for example, dichlorodifluoromethane, chlorodifluoromethane, sym-dichlorotetrafluoroethane, and the like.

"Chlorodioxin" refers to mono or polychlorinated benzodioxin structures.

"Corrosion" refers to the reaction of the interior surface of the reactor or tubes in contact with the reaction mixture at elevated temperature.

"DCB" refers to dichlorobenzene.

"Halogenated organic compound" refers to those aliphatic and aromatic and aliphatic-aromatic organic compounds, which have a halogen atom selected from fluorine, chlorine, bromine or iodine. Usually, the organic compound contains one or more chlorine atoms. Halogenated organic compounds include, but are not limited to, CFCs (see above), cleaning solvents such as methyl chloroform, 1,1,2-trichloroethylene; PCBs; PBBs, including pesticides, herbicides, etc.

"HG" refers to a mustard war gas.

"Hot water" refers to water at temperatures of 300°C or greater, preferably 330°C or greater, more preferably 350°C or greater, to 400°C.

"Material" to be decomposed refers to organic compounds, inorganic compounds, organometallic compounds and combinations thereof. Usually, the material is a waste or a reaction by-product. Organic compounds are preferred. "Material" includes organic compounds, having one or more atoms of nitrogen, sulfur, phosphorous, oxygen, and combinations thereof. Organic nitrogen compounds as materials include, but are not limited to, aniline, nitrobenzene, nitrotoluene, dinitrotoluene, trinitrotoluene, nitroglycerin, pentaerythritol, tetranitrate, picric acid, or combinations thereof. Organic phosphorus compounds include, but are not limited to, phosphoric acids, alkyl phosphonates, aryl phosphonates, or combinations thereof. Organic sulfur compounds include, but are not limited to, organic sulfonic acids, alkyl mercaptans, H₂S, alkyl sulfates, aryl sulfates, or combinations thereof.

"Oxidant" refers to an oxidizing agent which is a gas at the reaction conditions. Oxidants include air, oxygen, ozone, hydrogen peroxide, combinations thereof, and the like. Active oxidant is present in between 0.1 to 200 wt% of material present, preferably between 0.1 to 100 wt%, and more preferably between 0.1 and 50 wt%. Each carbon atom of the material to be decomposed requires at least one oxygen molecule for complete reaction to CO₂.

"2,2',4,5,5'-Pentachlorobiphenyl" refers to the following structure:

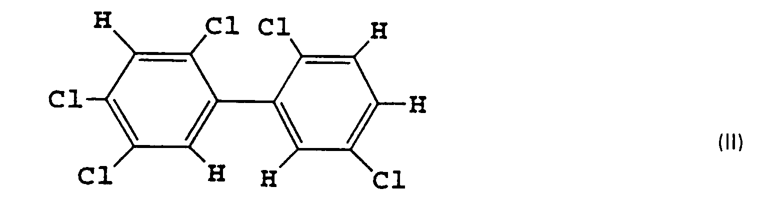

"Polyhalogenatedbiphenyl" refers to the structure: 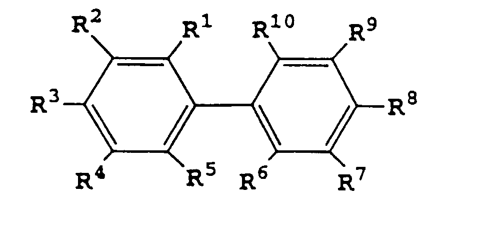 wherein R¹ to R¹⁰ are independently selected from hydrogen, Cl, and Br, with the proviso that at least one R¹ to R¹⁰ is -Cl or -Br. Preferably, at least two of R¹ to R¹⁰ are -Cl or -Br. Polychlorinated biphenyl is preferred, wherein each aromatic ring has at least one -Cl.

"SARIN" refers to a phosphorous containing war gas.

"Specific reactant" refers to a compound which is consumed during the reaction. Specific reactant is one which is essentially insoluble in the fluid medium at supercritical conditions; serves as a site for separation of sodium chloride, sodium sulfate, and other salts formed from the reaction of the organic feed with the specific reactant; prevents formation of acid gases; and substantially accelerates the oxidation rates. The reaction described herein is one that proceeds under essentially heterogeneous conditions with the specific reactant present as a solid and the feed present as a liquid and/or gas, preferably as a gas. Preferred specific reagents include, for example, sodium carbonate, calcium carbonate, magnesium carbonate, sodium bicarbonate, calcium bicarbonate, magnesium bicarbonate, and combinations thereof. The carbonates are preferred. Sodium carbonate is more preferred.

"2, 2', 4, 4'-Tetrachlorobiphenyl" refers to the following structure:

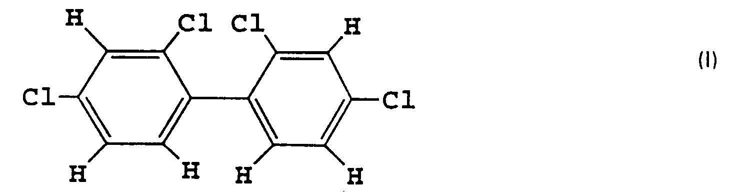

### Preferred Operating Ranges

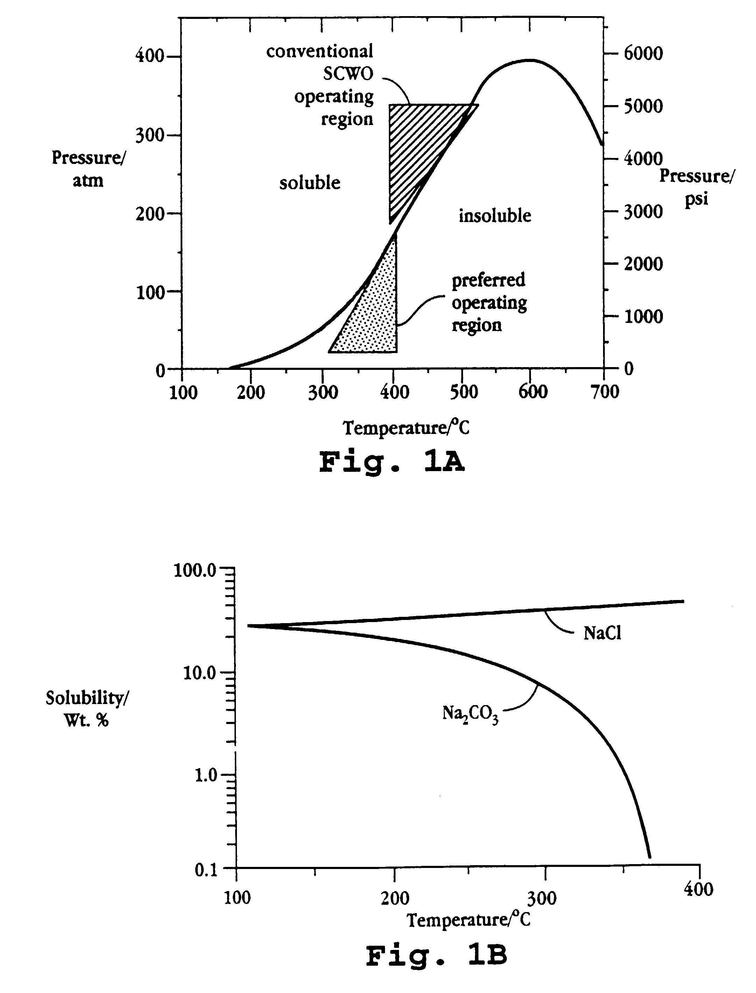

Presented in Figure 1 are solubility data developed from the data of Bischoff (Bischoff, J. L., (1991), "Densities of Liquids and Vapors in Boiling NaCI-H20 Solutions: A PVTX Summary from 300° to 500°C," American Journal of Science, Vol. 291, pp. 309-338 and Keevil (1942). Figure 1 shows the solubility of sodium chloride in water as a function of temperature and pressure, and defines the soluble and insoluble domains. Also presented in Figure 1 is a representation of the typical temperature/pressure regions for conventional SCWO. It is seen that the temperatures can exceed 500°C and the pressures 5000 psi (about 34.5 MPa). Most significantly, Figure 1 shows that conventional SCWO operates primarily in the soluble NaCI domain, where the brines developed are on the order of 40-60 wt% NaCI. Such brines are very highly corrosive, and since they readily coat the reactor walls and can freely flow to various critical components of the assembly, they are very damaging to the equipment and severely limit the reliability of the SCWO process.

Figure 1 also shows a region of operation outside of the brine domain in the insoluble region. This region, at lower temperatures and lower pressures, is the preferred region for operation of the present invention, since in it the reaction product sodium chloride is a solid, and is therefore not mobile. Thus, since it is desirable to minimize or to eliminate contact of the sodium chloride with the walls and other critical elements of the assembly, the process described herein emphasizes the utility of the specific reactant, e.g., sodium carbonate, surface rather than the assembly walls and other surfaces as the major site for deposition of product salts such as NaCI, including most common salts and other similar product salts.

It is noted moreover from Figure 1 that operation in the preferred region, at temperatures significantly lower than those presently employed in conventional SCWO, will require a substantial increase in oxidation rate to be effective. As described herein below, specific reactant, e.g., sodium carbonate, and like insoluble alkali materials provide the needed acceleration.

### Proposed Mechanisms

To elucidate these issues, it is of interest to compare the operative chemistry in conventional SCWO with that expected in the present invention.

In the SCWO literature for decomposition of a hazardous halogenated organic, e.g. tetrachlorobenzodioxin or chlorobenzene, in the presence of an oxidant, such as oxygen, the reaction is slow and produces acid, hydrogen chloride, which corrodes the materials of construction of the reaction vessel.

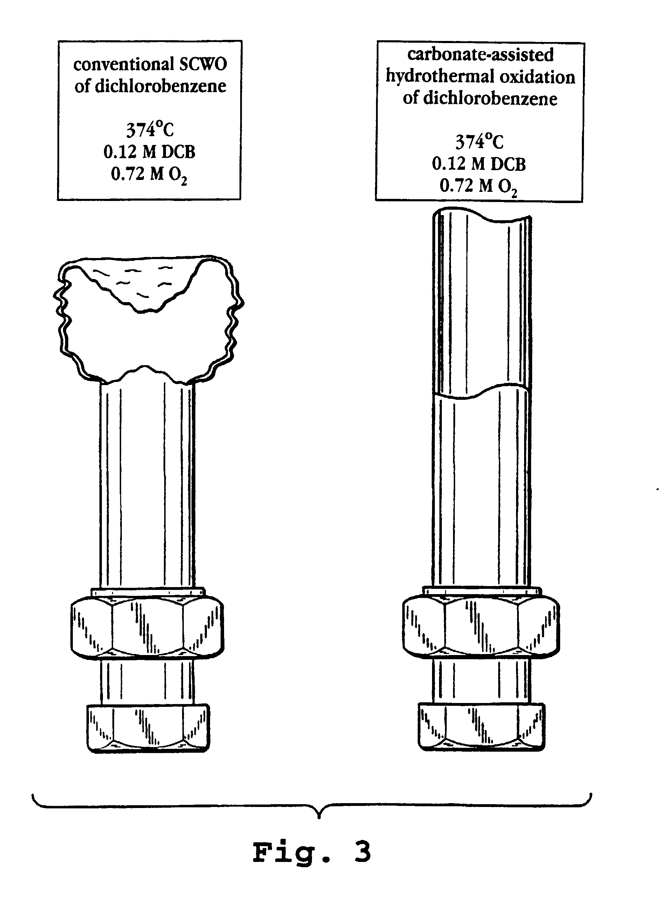

See below and Figure 3, left side.

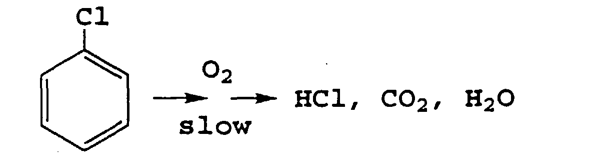

To deal with the formation of HCI in SCWO, Hong et al., in US 5,492,634A, disclose specifically the SCWO of chlorinated hydrocarbons (CHC), with NaOH added as a solute in the starting aqueous stream to serve as a pretreatment for both destroying the CHC, and for neutralizing the HCI formed in the process via equation (1) below:

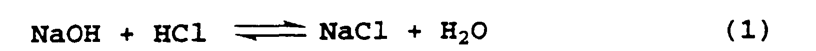

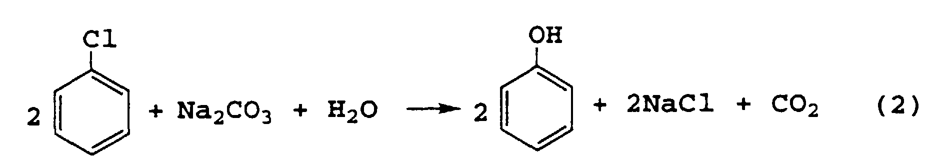

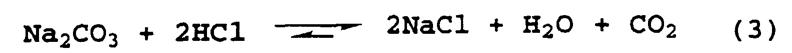

However, as reported in the literature dealing with hydrothermal fluids, equilibrium (1) is far to the right only at lower temperatures. The position of the equilibrium shifts dramatically about the critical temperature of water (374°C) (according to X. Chen, et al. (1994), "Determination of Enthalpy of lonization of Water from 250 to 350°C," J. Sol. Chemistry, Vol. 23, pp. 747-768). Thus, at SCWO conditions the equilibrium (1) can be far to the left, and the acid gas, HCI, is not neutralized.

The novelty of the present invention deals with that vulnerable element in SCWO and includes our recognition that a specific family of alkali materials must be used to overcome the formation of HCI and other acid gases during aqueous oxidation. The preferred family of materials include carbonates, such as sodium carbonate, calcium carbonate, magnesium carbonate, sodium bicarbonate, calcium bicarbonate, magnesium bicarbonate, and the like and combinations thereof. This family of alkali materials is insoluble in water at SCWO temperatures, as shown in Figure 1A, which is created from data by Keevil (1942) and Morey, et al., (1956). Figure 1 A compares the solubility behavior of sodium carbonate and the like with that of sodium chloride, whose aqueous solubility, like that of the majority of salts, increases with increasing temperature. Carbonates are thus insoluble specific reactants at the reaction conditions of the present invention.

Thus, the present invention involves the novel concept, as shown in equation (2), that the direct reaction of a halogenated organic material on the surface of a solid alkali directly produces NaCI, which, on the basis of the relationships in Figure 1, remains immobilized on the surface of the specific reactant, and does not migrate freely. There is thus essentially no acid gas intermediate in the present invention.

The NaCI thus produced might engage in the undesirable reverse of equation 1 and produce HCI. However, the additional surprising novelty of this invention is the recognition that the neutralization equation (3), in which the acid gas reacts with sodium carbonate and similar materials, is fully to the right, as indicated by the sizes of the arrows, even under hydrothermal conditions. The reaction is driven to the right and is therefore essentially irreversible by the generation of the very stable gas, carbon dioxide. The net result is the destruction of the chlorinated waste with the full avoidance of an acid gas. The product NaCI or other product salt is formed directly on the added specific reactant surface, and being insoluble is not mobile and not in contact with the reactor walls. The NaCI remains with the carbonate and is removed with it.

### Process Configurations

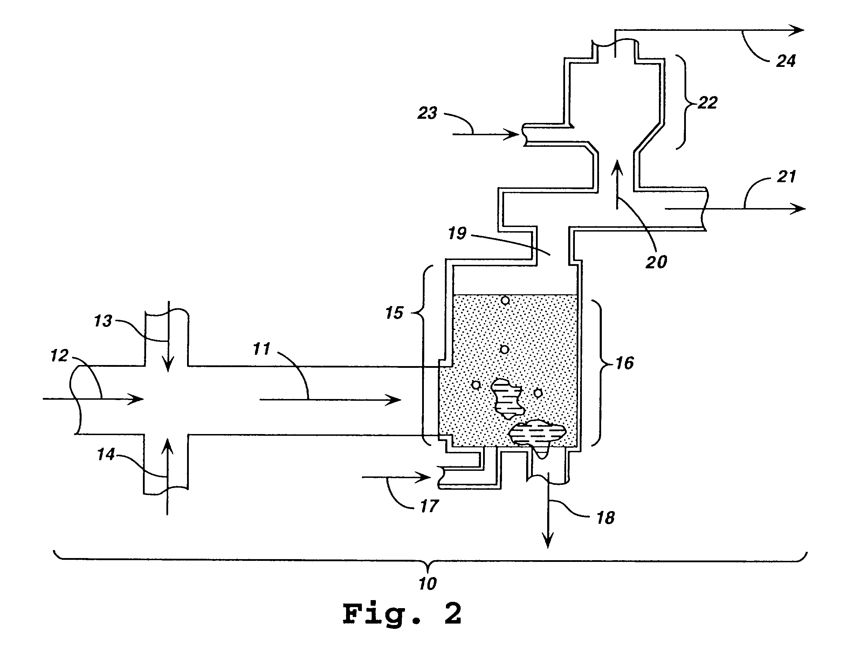

In Figure 2, showing one embodiment of the present process, equipment configuration (10) is shown in which hydrothermal water oxidation is essentially carried out using a fluidized bed of specific reactant. The incoming feed stream (11) of waste material (12) as a solid, solution, or slurry, added specific reactant as a solid or slurry (13), such as sodium carbonate, and water (14) is heated in reaction zone 15 to 300 to 450°C, at between 10 and 400 atm (about 1 to 40.5 MPa), e.g. 380°C/220 atm (22.3 MPa), or above the critical point of water. The specific reactant, e.g. sodium carbonate, is insoluble in the fluid and is effectively a reactive fluid bed (16), fluidized by the mixture of water and oxidant (air or oxygen) (as stream 17) entering from the bottom of unit 15. The surface area of reactant, e.g. sodium carbonate is about 180 cm²/g or higher. The surface activity of the specific reactant at these conditions (i.e. suspended in a supercritical water medium at liquid densities at a temperature where its solubility drops essentially to zero) is substantial, and converts the waste materials readily and rapidly to simple oxygenates. These oxygenates exit reaction zone (15) at opening (19) and are then rapidly oxidized to carbon dioxide (20) with the oxygen present. In the preferred embodiment, the product salt is formed as a solid and is deposited on the specific reactant surface. Under some reaction conditions a dense product of specific reactant and created solid salt (e.g. NaCI, NaNO₃, etc.) (18) exits at the bottom of the reaction zone (15). Water is separated and optionally is recycled at to incoming stream 17. Specific reactants, such as sodium carbonate, are commercially available, are inexpensive, and are therefore a suitable consumable reactant. The cost of the present process using sodium carbonate as the specific reactant and oxygen as the oxidant is estimated to be about $0.08 per gallon (about $0.02 per liter) at a rate of 300 gallons (about 1135 liters) per minute.

In the optional final step, the product stream 20 is passed through a secondary decomposition process 22 such as, for example, a commercial oxidizer, e.g., a Thermatrix ® Flameless Oxidizer, available from Thermatrix, Inc. of San Jose, California, having an air inlet 23 which completes the conversion of any trace, nonacceptable volatile gases which are not eliminated in the fluid bed, thus assuring an acceptable exhaust stream 24.

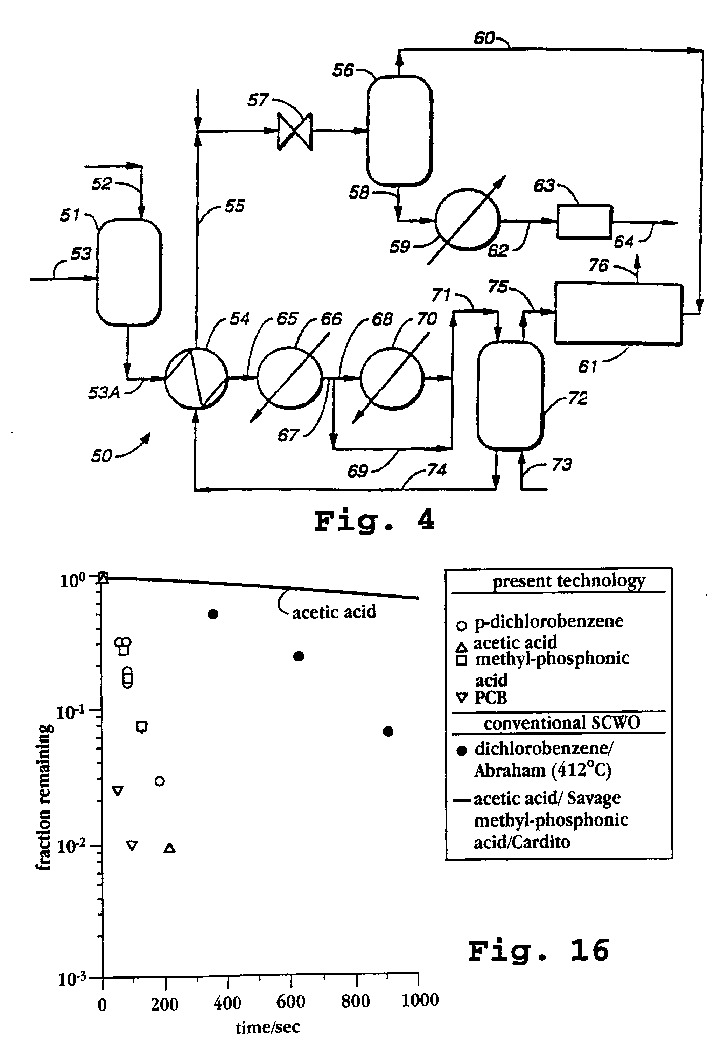

Figure 4 is another embodiment of the present process having equipment configuration (50). To feed vessel 51 is added solid or aqueous specific reactant 52, such as sodium carbonate, and material 53 to be decomposed, usually in a water solution. The mixture in vessel 51 is conveyed to economizer 54, via line 53A, where the mixture is heated to 300 to 450°C at 10 to 400 atm (about 1 to 40.5 MPa). A portion of the water is removed from the reaction mixture at elevated temperature and conveyed via line 55 to be added to separator 56 through valve 57 and through line 58 to cooler vessel 59. If necessary, a portion of the high boiling liquid is conveyed through line 60 to the secondary decomposition reactor 61. As necessary, a portion of the liquid in flash vessel 59 is conveyed through line 62 to brine cooler 63 and exits via line 64 to the environment. The major portion of the reaction mixture in economizer 54 is conveyed via line 65 to preheater 66. The reaction mixture exits preheater 66 via line 67 and is split into lines 68, leading to a start up heater 70, and 69, leading via line 71 to hydrothermal reactor 72. In reactor 72, the reaction mixture is heated to 300 to 450°C under pressure in the presence of an oxidant entering reactor 72 via line 73. A portion of the reaction product is recycled to economizer 54 via line 74. The effluent gases exit reactor 72 via line 75 to a secondary decomposition unit 61, as needed. The acceptable gases are produced and vented to the environment via line 76.

Figure 15 is another embodiment of the present process where the hydrothermal reactor 72 of Figure 4 is replaced by the reaction section shown as 105, which consists of a hydrothermal reactor 72A, a solids separator 80, a brine separator 88, a filter 83, a steam generator 97, and two flash separators 93 and 102. The preheated reaction mixture is conveyed via line 73A to the hydrothermal reactor 72A. In reactor 72A, the reaction mixture is heated to between 300 to 450°C under pressure in the presence sodium carbonate as a solid, and the presence of a gaseous oxidant entering reactor 72A via line 73A. The reaction mixture is recycled to solids separator 80 via line 81. The solids separator 80 separates the reaction mixture into two portions, a fluid stream 82 that is relatively free of solids, and fluid stream 85 that contains the solids removed from the reactor 72A. The solids at this point consist of sodium carbonate, sodium chloride, and insoluble forms of any metals, sulfur or phosphorus that were present in the feed. Stream 85 is conveyed to a cooler 86, where the temperature is adjusted to the point at which sodium chloride forms a brine having a concentration of about 40%, but where sodium carbonate and the metal, sulfur, and phosphorus species are insoluble in the fluid. The three phase mixture (solids, brine, and fluid) exits cooler 86 via line 87 and is conveyed to brine separator 88. The brine leaving separator 88 is conveyed by line 90 to valve 92 and flash separator 93. Gases leaving flash separator 93 are conveyed by line 95 and then line 75A to a secondary decomposition unit 61. The brine leaving flash separator 93 can be disposed of or sent to a standard chlorine recovery operation. The fluid and solids leaving the brine separator 88 are conveyed back to the reactor 72A via line 89. A portion of the solids are purged from the system via line 91 to prevent the buildup of metals, sulfur, and phosphorus in the system. The sodium carbonate added at line 71A compensates for the sodium carbonate removed via line 91. The fluid stream 82 leaving solids separator 80 passes through a filter 83. A solids free fluid exits the filter via line 84. A portion of the solids free fluid is conveyed via line 99 to a steam generator 97. In the steam generator, some of the sensible and latent heat in the fluid converts boiler feed water 96 to steam 98. The partially cooled fluid leaving the steam generator is conveyed to the economizer 54 via line 74A. Another portion of the solids free fluid is conveyed by line 100 to valve 101 and flash separator 102. Gases leaving separator 102 are conveyed via line 104 and then 75A to a secondary decomposition unit 61, as needed. Liquid leaving separator 102 is conveyed via line 103 to brine cooler 63.

A large range of materials can be treated with this technology, including, but not limited to: waste, ordnance, chemical warfare agents, energetic materials, explosives, paint sludges, chlorofluorocarbons, various polymer wastes, phosphorous organic compounds, nitrogen-organic compounds, sulfur organic compounds, halogenated wastes, e.g. cleaning solvents, dairy waste, pharmaceutical waste, food waste (as described in US5,409,617A) and the like.

### Advantages of the Invention

Others have reported the use of alkali in separate applications to neutralize product acid gases and to accelerate the rate of oxidation. In the case of chlorinated waste in particular, however, where NaCI is formed, we emphasize that neutralization is not sufficient. Thus, the common region of SCWO operation is one in which the product NaCI is present at a 50-60 wt% brine. The salt is therefore highly mobile and readily contacts large regions of the reactor surfaces and associated plumbing. NaCI is highly corrosive in this form, and ultimately can come out of solution various lines and valves, clogging the process equipment. Thus, even the addition of a neutralizing agent, conventional SCWO operation is limited at best, and in the case of halogenated waste in particular is highly problematic.

The core of the novelty of the present invention, which enables the SCWO principle to be applied to halogenated and like wastes, is the use of a single material, sodium carbonate and like materials, to simultaneously:
1. eliminate of the formation of acid gases such as HCI;
2. bring about the rate of accelerations necessary to allow operation at the lower pressures and temperatures conditions which bring the system into the insoluble domain of the NaCI/water phase diagram; and
3. as a result of that shift in conditions, immobilize the product NaCI as a solid fixed on the carbonate surface, thereby avoiding its deposition on the reactor walls and other critical surfaces, and facilitating its removal from the system.

As stated above, the novelty of the invention includes the accelerated rates of oxidation. The acceleration is necessary to enable the process to be operated in the more modest temperature/pressure region of the insoluble domain in Figure 1, thereby assuring that the product NaCI is immobilized on the carbonate surface.

Kinetic data are shown in Figure 16, which presents data for oxidations of acetic acid, methylphosphonic acid, p-dichlorobenzene, and PCB at 380°C. Figure 16 also shows for comparison data for the conventional SCWO of dichlorobenzene (at 412°C, Jin, et al., 1992), and a line representing the rates of conventional SCWO of acetic acid (Savage, et al., 1995). The rates for the SCWO of methylphosphonic acid, with its oxidation resistant C-P bond, will fall in the same range as that for acetic acid.

The rates under the present conditions are 2-3 orders of magnitude or greater than those for conventional SCWO. Thus, after 300 seconds at 412°C, conventional SCWO destroys about 50% of a dichlorobenzene stream, whereas the present technology at 380°C destroys 99.9 + % of the material. The differences in the results for acetic and methyl-phosphonic acids are even more dramatic, with virtually no destruction after 400 seconds in the conventional SCWO case, in contrast to essentially full destruction in the case of the present invention.

The results for acetic acid and methylphosphonic acid are distinctively significant since these two compounds are noted as particularly difficult to decompose in, respectively, the conventional SCWO of common organic waste (Savage, et al., 1995) and the oxidative destruction of chemical warfare agents such as VX (J. Cardito, 1996).

The destruction rates for the compounds in the case of the present invention appear to be essentially identical. Thus, it appears that the rate controlling step for the oxidation is independent of the starting feed, although it is noted that the PCB is yet more rapidly destroyed. The mechanistic details of the process are still being evaluated, but a new oxidative regime has been uncovered in the case of carbonate.

### Model Compound Studies

A useful model compound for the study of the oxidation and decomposition of chlorodioxins, e.g. tetrachlorobenzodioxin, or polychlorinated biphenyls, is p-dichlorobenzene (DCB).

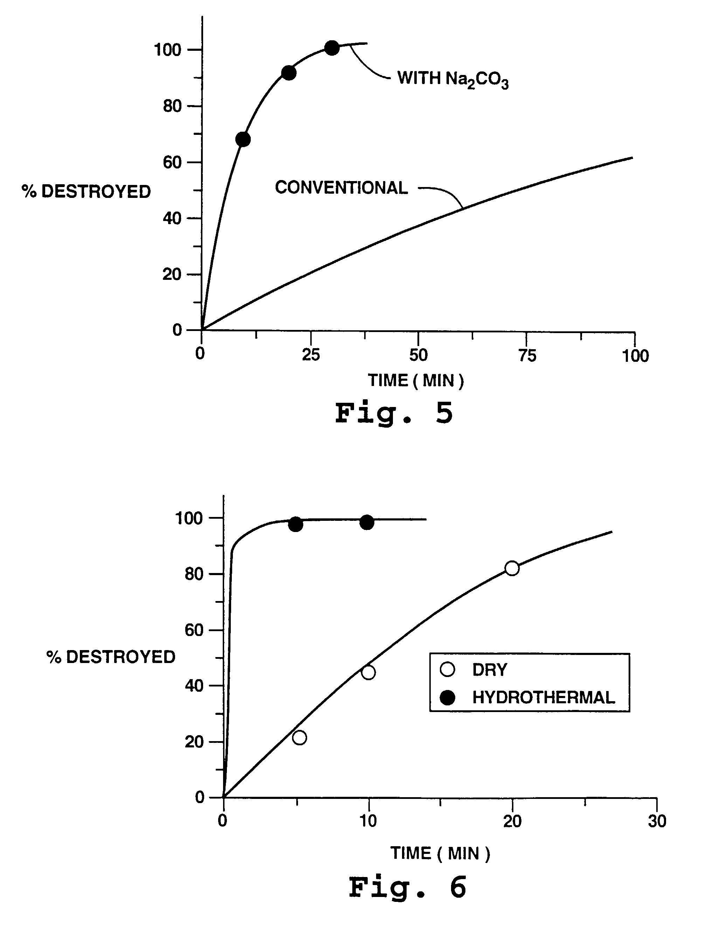

The studies were conducted in small stainless steel reactors, and the results are presented in Figure 5. Figure 5 compares the results with a rate profile projected to our conditions based on the reaction kinetics reported for the conventional, supercritical water oxidation of DCB by Jin et al. (1992). This approach yields a substantially accelerated decomposition rate, and the process appears to be thorough, with the isolated product mixture from a 27-min sodium carbonate reaction showing a total organic carbon (TOC) content of <0.04%. Total conversion of organic chlorine to chloride ion is also achieved.

The hydrogen chloride removal in the presence of specific reactants was demonstrated in reactions to duplicate the results of Jin et al. (1992) using large, practical levels of DCB. In two separate SCWO reactions, large quantities of HCI were produced which corroded the interior reactor surfaces to the point of failure (rupture) during reaction (See Figure 3 on the left). On the other hand, the reactor used at the conditions of the present invention with specific reactant present was unaffected after several reactions (See Figure 3 on the right).

The result of the decomposition of two PCB cogeners (Model compounds I and II, see definitions above), are presented in Figures 9A to 9D. Figure 9A (method blank) shows the results of a control reaction in which all of the extraction and analytical steps were performed, but the sample contained no added PCBs (gas chromatograph conditions, column JNW DB-5MS, initial temperature 65°C, temperature increased at 10°C/min to 150°C, then increased at 3°C/min to 275°C). Figure 9A shows a level of contamination developed, but, unfortunately, contaminant peak interfered with the PCBs peak. The clean PCB detection is shown in Figure 9B, which was a control reaction conducted with no added carbonate. In this reaction, greater than 60% of the starting PCBs were recovered.

The reduction in PCB quantities is shown in Figures 9C and 9D for the two different loading levels. Close inspection of the trace shows barely detectable PCB quantities at less than 1 µg/L. The result may be difficult to see in the figure, but an enlarged portion of Figure 9D is presented as Figure 10, and the findings are surprising. The responses for PCBs are well below 1 µg/L, the levels for which have been sketched in.

The hydrothermal oxidation and decomposition of the polyhalogenated biphenyl compounds, preferably polychlorinated biphenyl, occurs between 300 and 400°C, preferably between 350 and 400°C, and more preferably between 375 and 400°C. For this decomposition the specific reactant, preferably sodium carbonate, is present in at least a stoichiometric amount to the waste stream. For halogenated aromatic organic compounds, once a halogen has been converted to a hydroxyl group, the oxidation of the "phenol" occurs rapidly in the presence of the oxidant. The amount of water is present to obtain the reaction conditions and can be determined by one of skill in the art. The amount of oxidant, preferably air or oxygen, is present in an amount to oxidize the organic compound to carbon dioxide, water or intermediates which are readily degraded by secondary disposal methods. The levels of oxidant are determined by one of skill in this art by knowing the result to be achieved.

The decomposition with specific reactant in the absence of water, was also studied, using hexachlorobenzene as the substrate. Hexachlorobenzene is a common fungicide. The data are presented in Figure 6, at 380°C (dry and with water) and demonstrate the need to have water present. Thus, in the absence of water, the destruction is slow, but with water present, the rate of reaction is extremely high.

### Comparative Studies and Discussion

The technical and environmental problem to be solved is one of disposing of tons of hazardous waste generated each year. As described above, environmentally effective decomposition and disposal of organic chlorine compounds and now obsolete ordnance materials is particularly difficult.

The present invention as described provides for a new route to decompose toxic and/or hazardous compounds, particularly organic chlorine compounds, under more mild reaction conditions than are presently possible. The present invention uses specific reactants in the presence of hot water and/or superheated water (SCWO) under pressure to decompose organic compounds quickly at lower temperatures and pressures than are presently used. This invention is particularly useful to decompose tetrachlorobenzodioxin and polychlorinated biphenyls which are persistent environmental contaminants.

Hong, et al. US5,492,634A, discloses specifically the supercritical water oxidation (SCWO) of chlorinated hydrocarbons (CHC), with NaOH added as a solute in the starting aqueous stream to serve as a pretreatment for both destroying the CHC and for neutralizing the HCI formed in the process.

Specifically, we have not attempted to optimize reaction conditions nor neutralize acid gases. Applicants have sought, rather, to establish a formally new concept, invention and approach the benefits of which include, but are not limited to, substantially increased reaction rates and elimination of acid gases, purposefully employing a heterogeneous reaction system.

While not wanting to be bound by theory, the core of the present process involves the unique and purposeful utilization of an extensive, reactive, and reacting surface such as that provided by solid sodium carbonate, to support and to accelerate the conversion. Thus, in the present invention we are not providing a pretreatment. Our process employs directly and purposefully such a solid surface as an essential and integral part of the reactor system. It is not clear how any element of the Hong, et al. teaching would lead one of skill in the art to the present invention.

In contrast to the simple and obvious neutralization of HCI provided by soluble bases such as sodium hydroxide, the present invention is the availability of an extensive and reactive process-facilitating surface. This surface is supplied by sodium carbonate and a small group of other salts. Thus, the unusual solubility behavior of sodium carbonate in the reacting system is utilized at elevated temperatures. This atypical behavior is not taught by Hong, et al. nor by the reference, Modell, et al. US 4,543,190A, and is a quality decidedly not shown by soluble sodium hydroxide nor most other electrolytes. It is noted with reference to Figure 1: In direct contrast to solubility behavior of various inorganic salts, the solubility of a specific reactant, such as sodium carbonate, in water medium rapidly decreases at higher temperatures, specifically at about 300°C and above, and to and above the critical temperature of water at 374°C. A few other salts behave in a similar way, including calcium oxide, calcium hydroxide, sodium sulfate, sodium fluoride, and sodium triphosphate.

This solubility behavior, however, is fully contrary to the majority of common salts, including sodium bromide, sodium iodide, sodium nitrate, and most potassium salts, including potassium carbonate, whose solubilities increase continuously with increasing temperature. Further, unlike the small group of unusual salts, in their respective saturated solutions, there is no critical behavior.

In contrast to the present invention, which purposefully employs a reactive surface, it is clearly recognized and disclosed in both Hong, et al. and Modell that in their respective systems the reactions take place completely in the vapor phase.

In the present invention there is no evidence that the carbonate surface acts catalytically; that is, the carbonate is consumed in the process as one of the reactants. This feature of our invention is compared to the findings of Yang and Eckert (Ind. Eng. Chem. Res. 2009-2014 (1988) who studied the effects of added reactor surface in conventional supercritical water oxidation (SCWO) and found only little effect. As discussed, the accelerating effect seen in our system is a major effect.

With regard to SCWO catalysis, a novel aspect of the present invention is accentuated in comparison of our results with those of L. Jin, et al. Chem. Eng. Sci. Vol 47, 2659 (1992) and H. Yang and C. Eckert, supra, who have sought development of heterogeneous catalysts for supercritical water oxidation. Their results show that the accelerations from conventional catalysis, as displayed in Figure 11, is modest. Figure 11 presents the data of Jin et al., supra, who employ the common oxidation catalyst V₂O₅ in studies with dichlorobenzene. Curiously, Figure 11 shows that in the absence of water, i.e. in under conditions of catalyzed gas phase oxidation, the conversion is somewhat faster.

On the other hand, accelerations in reaction rate found in the operation of the technology of the present invention are well beyond those seen or reported in conventional catalysis. The present data show rate accelerations (of 10 to 100 to 1000 times faster), even more striking accelerations underscoring the novel aspects of our process. In studies of the destruction of chlorophenol, as shown in Figure 12, the data of R. Li, et al. AlChE Journal, Vol 39, 178-187 (1993) was duplicated closely in the absence of the carbonate surface. As Figure 12 shows, however, with a carbonate surface present at the same conditions, a destruction rate larger by a factor greater than ten is observed. Comparison of Figures 11 and 12 shows that there are considerably smaller effects in Figure 11.

Such remarkable accelerations are unprecedented in common SCWO catalysis, and therefore, must be due to factors other than those operating on conventional catalytic surfaces. The rate accelerations are not merely optimization of oxidation conditions. In fact, with reference again to Figures 11 and 12, ignoring the small temperature difference in these figures and recognizing the different abscissa scales, the comparison shows that rate accelerations observed for our carbonate-surface-based conversions are significantly superior as well to catalyzed gas phase oxidation employing a conventional oxidation catalyst.

Recently the data of Figure 13 was developed which shows a plot of the fraction of reactant remaining vs. time in seconds in experiments with dichlorobenzene (DCB) and with the tetrachlorobiphenyl (PCB). The data from the conventional supercritical water oxidation of Abraham, et al. (Chem. Eng. Sci., Vol 47, 2659-2664,1992) for DCB at 374°C are shown, and demonstrate that the reaction time for 90% reaction is in the thousands of seconds. By increasing the temperature to 412°C (above the super critical temperature), the reaction rate is accelerated somewhat.

The plot of Figure 13 shows that our DCB work at 380°C in the carbonate-based system of the present invention brings about an increase in reaction rate to values well above those rates, at both 374°C and 412°C. The conversions of chlorinated hydrocarbon in the 99⁺% range are attained in times below 100 sec. The plot contains data for the PCB as well, considering both a homogeneous case, where the PCB is at its solubility limit in water (about 0.5 ppm), and a heterogeneous case, to reflect the conversion capability for slurries. This striking level of increase in reaction rate is due strictly to the presence of the insoluble carbonate, on which surface the very active chemistry of the present invention takes place.

These data provide the most convincing evidence to date to support and to confirm a novel, surface-promoted disposal process. Figure 14 shows data obtained with acetic acid as the feed. Acetic acid is used since it is acknowledged as a common, undesirable, refractory product from aqueous oxidations of many kinds of organic waste (See Savage, et al., Env. Sci. and Technol., Vol. 29, 216-221 (1995)). The purpose for conducting the study included the considerations that: i) a recalcitrant product such as acetic acid would be expected from this research with chlorinated organics and other wastes, and could be an element limiting its overall performance, and ii) acetic acid's very stable nature made it a good candidate to challenge our system's performance. The results which were obtained were unexpected.

Figure 14 shows the data of Savage, et al., supra, and the present results for acetic acid destruction at 380°C. As the figure shows, the rate of acetic acid destruction by the present process is greater than 500 times faster than that obtained for SCWO destruction at the same temperature. That increase of 500 times is well beyond what might be expected in an oxidation purely in the gas phase. In other words, the increase goes beyond the range of improvement available from simple optimization of the conditions. The experimental results are only explained through a reaction scheme in which the acetic acid binds to the basic solid carbonate surface, and the resulting acetate then undergoes oxidative thermolysis.

This result is one which moves our present invention clearly out of the conventional SCWO realm. The present invention is based on the oxidative thermolysis of a substance fixed to a reactive (i.e., not catalytic) surface. This is a set of conditions and results which, to the best of our knowledge, is heretofore unknown.

It is apparent from these comments that our carbonate-based process provides improved organic conversions and increase in reaction rates at levels that are beyond mere optimization and neutralization. They, in addition, are not the product of homogeneous, thermal reaction. The improvements occur by the purposeful utilization of an abundant and reactive surface, which in turn is provided by the novel low solubility properties displayed by carbonates, such as sodium carbonate at and near 374°C.

### EXAMPLES

The following Examples are presented to be explanatory and descriptive only, and are not to be construed to be limiting in any way.

### Example 1: Sodium Carbonate Decomposition of p-Dichlorobenzene

(a) *p*-Dichlorobenzene (0.108 g, 0.735mmol) is placed in a metal reactor (6mL), with water (2 g), sodium carbonate (0.150g, 1.4 mmol) and oxygen (13.2mmol). This reaction mixture is heated at 373°C for 27 min. at 250 atmospheres (25.3 MPa), then cooled to ambient. The reaction mixture is almost water-clear and shows a total organic carbon (TOC) of less than 0.04 wt. %.
(b) Similarly, when the decomposition in (a) is repeated except that sodium carbonate is replaced by a stoichiometrically equivalent amount of calcium oxide, the amount of the decomposition of organic compound is substantially the same.
(c) Similarly, when the decomposition in (a) is repeated except that sodium carbonate is replaced by a stoichiometrically equivalent amount of calcium hydroxide, the amount of the decomposition of organic compound is substantially the same.
(d) Similarly, when the decomposition in (a) is repeated except that the *p*-dichlorobenzene is replaced by a stoichiometrically equivalent amount of tetrachlorobenzodioxin, one or more polychlorobiphenyl, one or more polybromobiphenyl, methylene chloride, chloroform, carbon tetrachloride, methylchloroform, 1,2-dichloroethane, 1,1,2,2-tetrachloroethane, dichlorofluoromethane, 1,2-dichloro-1,1,2,2-tetrafluoroethane, lindane, hexachlorobenzene, chlorofluorocarbon or combinations thereof, the amount of the decomposition of the organic compound is substantially the same.
(e) Similarly, when the decomposition in (a) is repeated except that the oxygen is replaced with a stoichometrically equivalent amount of air (having astoichometrically equivalent amount of oxygen), ozone, hydrogen peroxide, or combinations thereof, the amount of the decomposition of the organic compound is substantially the same.

### Example 2: Sodium Carbonate Decomposition of Hexachlorobenzene

(a) Hexachlorobenzene is decomposed in the manner described in Example 1(a). Hexachlorobenzene (0.735 mol) is placed in a metal reactor (6 mL) with water (2 g), sodium carbonate (0.45g, 4.2mmol) and oxygen (20mmol). Hexachlorobenzene has 3 times the organic chlorine to be decomposed. This reaction mixture is heated at 373°C for 27 min. at 250 atmospheres, then cooled to ambient. The reaction mixture is almost water-clear and shows a total organic carbon (TOC) of less than 0.04 wt. %.
(b) Similarly, when the decomposition in (a) is repeated except that sodium carbonate is replaced by a stoichiometrically equivalent amount of calcium oxide, the amount of the decomposition of organic compound is substantially the same.
(c) Similarly, when the decomposition in (a) is repeated except that sodium carbonate is replaced by a stoichiometrically equivalent amount of calcium hydroxide, the amount of the decomposition of organic compound is substantially the same.
(d) Similarly, when the decomposition in (a) is repeated except that the hexachlorobenzene is replaced by a stoichiometrically equivalent amount of tetrachlorobenzodioxin, one or more polychlorinated biphenyl, methylene chloride, chloroform, carbon tetrachloride, methylchloroform, 1,2-dichloroethane, 1,1,2,2-tetrachloroethane, 1,1,2-trichloroethyline, dichlorofluoromethane, 1,2-dichloro-1,1,2,2-tetrafluoroethane, tetrachloroethylene, lindane, hexachlorobenzene, or combinations thereof, the amount of the decomposition of the organic compound is substantially the same.
(e) Similarly, when the decomposition in (a) is repeated except that the oxygen is replaced with a stoichometrically equivalent amount of air (having a stoichometrically equivalent amount of oxygen), ozone, hydrogen peroxide, or combinations thereof, the amount of the decomposition of the organic compound is substantially the same.

### EXAMPLE 3: Sodium Carbonate Decomposition of PCB

Stainless steel (316) reactors tubing bombs 4.2 cm³ in volume were used. Parallel reaction bombs were loaded with 2.0 g water, 0.5 g Na₂CO₃, and either 0.20 µg or 2.00 µg each of the two polychlorinated biphenyl (PCB) compounds, (I and II), see definitions.

The total PCB loadings were therefore 200 and 2000 µg/L of water. (The solubilities of structure I and II in water respectively at 25°C are 90 and 10 µg/L, and thus they were present initially at levels exceeding their solubilities.) Control runs were conducted without added carbonate and without added PCB. the reactors were sealed under argon gas.

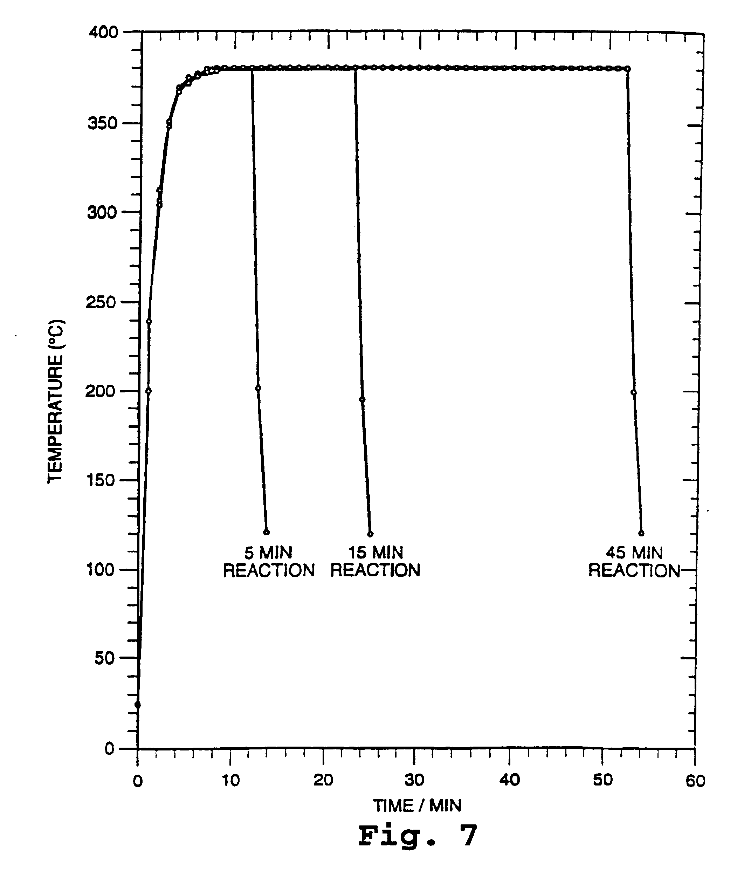

The reactors were heated in a fluidized sand bath at 380°C, and the temperature was monitored using an internal thermocouple. The heating periods were 5, 10, and 15 minutes. The heating profiles presented in Figure 7 show that heatup time was satisfactorily rapid. After analysis the 5 min data were sufficient for decomposition and are reported.

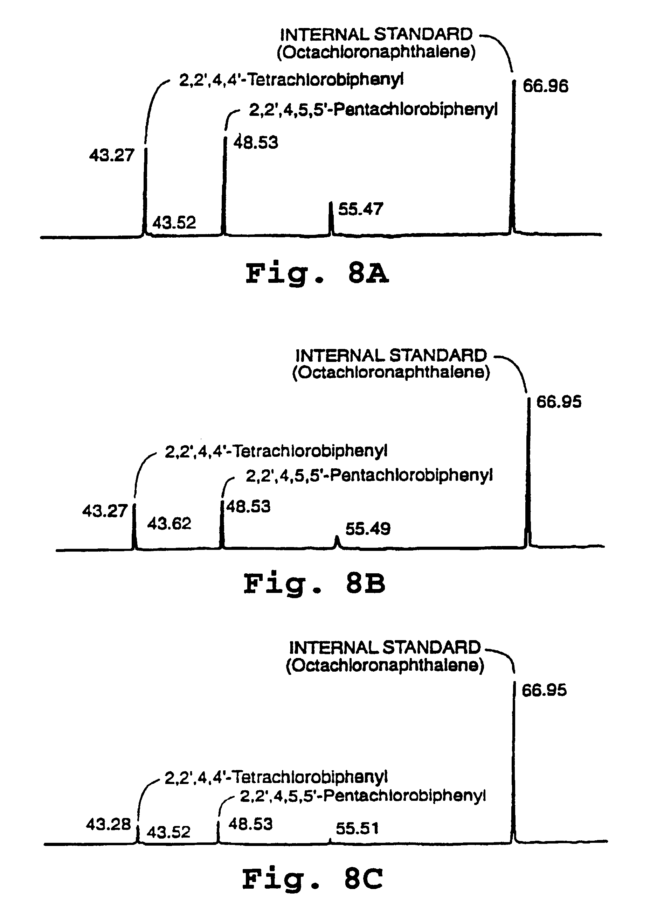

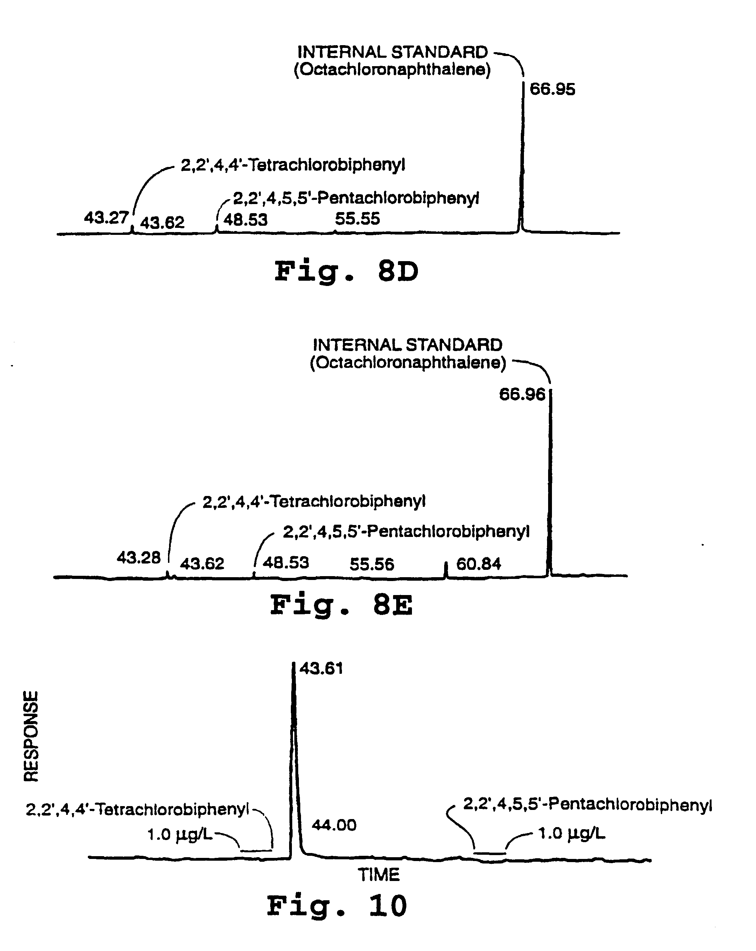

After cooling, the reactors and reaction products were extracted with dichloromethane, at least 5 X 2 ml. The dichloromethane fractions were then replaced by hexane (60 ml), an internal standard (octachloronaphthalene) was added, and the final volume of the organic extract was adjusted. Analyses were then conducted by a gas chromatogram (GC) equipped with an electron capture detector (ECD). The PCBs were quantitated using relative response factors. The calibration data are presented in Figures 8A to 8E. Responses are apparent for loadings down to the 1 µg/L level; however, quantitative interpretation of signals below the 1.0 µg/L may be in question.

### EXAMPLE 4: Sodium Carbonate Decomposition of Organo Phosphorus Compound

Experiments were carried out in a continuous flow reactor containing suspended sodium carbonate at 380°C and 3500 psi (24.1 MPa). The procedure involved utilizing initial quantities of soluble sodium carbonate such that it was soluble at the starting ambient temperatures. Sodium carbonate then came out of solution as the stream entered the heated zone of the reactor, providing the necessary solid phase.

The initial concentrations of the reagents methylphosphonate, sodium carbonate, hydrogen peroxide were respectively 200 ppm (2 mM), 0.2 wt. % (19 mM) and 36 mM. The results, presented in Table A show methylphosphonate to be destroyed in a first order manner with a first order rate constant of 2.5x10-²s-¹.

Product analysis and quantitation of treated samples of methylphosphonate were performed using a Dionex 2000i ion chromatograph. The major product of oxidation of methylphosphonate under assisted hydrothermal oxidation conditions was identified as phosphate.

**TABLE A**

| DESTRUCTION OF METHYL PHOSPHONIC ACID AT 380°C | | |
|---|---|---|
| | Percent remaining | |
| Time (sec) | Carbonate and Peroxide | Water only |
| 0 | 100 | 100 |
| 58 | 26 | -- |
| 77 | 16.5 | 76.5 |
| 116 | 8.5 | -- |

While only a few embodiments of the invention have been shown and described herein, it will become apparent to those skilled in the art that various modifications and changes can be made in the present invention to an improved method of hydrothermal oxidation using specific reactants, such as sodium carbonate, and an oxidant, without departing from the scope of the present invention as defined in the appended claims.

## Claims

1. A process for the decomposition of material selected from the group consisting of organic compounds, inorganic compounds, and combinations thereof, to compounds which are environmentally acceptable, or which are amenable to further degradation by conventional disposal systems to produce environmentally acceptable products, which process comprises:
(a) conveying an aqueous solution or an aqueous slurry of the material to be decomposed into a reaction zone capable of withstanding the temperatures and pressures of the decomposition; and
(b) contacting the material, in the presence of water, with a specific reactant present as a solid in an amount effective to decompose the material under hot or supercritical water oxidation conditions, said conditions including a reaction temperature of between 300 and 450°C and a reaction pressure of between 10 and 400 atmospheres (about 1 to 40.5 MPa),
wherein the specific reactant is at least about 90% insoluble in an aqueous medium at said hot or supercritical water oxidation conditions, and reacts to neutralize any acid gases produced in the decomposition,
said contacting being carried out, in the presence of a gaseous oxidant, for a reaction time sufficient to convert about 99% or greater of the material to compounds which are environmentally acceptable, or to conversion compounds which are amendable to further degradation.

2. The process of claim 1, wherein in step (b) the temperature is between 373° and 400°C, and the pressure is between 100 and 300 atmospheres (about 10 to 30.5 MPa).

3. The process of claim 1, wherein the specific reactant is selected from the group consisting of sodium carbonate, calcium carbonate, magnesium carbonate, sodium bicarbonate, calcium bicarbonate, magnesium bicarbonate, and combinations thereof.

4. The process of claim 3, wherein the specific reactant is sodium carbonate.

5. The process of claim 1, wherein the gaseous oxidant is selected from the group consisting of air, oxygen, hydrogen peroxide, ozone and combinations thereof.

6. The process of claim 5, wherein the gaseous oxidant is oxygen or air.

7. The process of claim 6, wherein the oxidant is oxygen.

8. The process of claim 1, wherein the oxidant is present in an amount of between 0.1 and 50% by weight of the material.

9. The process of claim 1, wherein the material is selected from halogenated organic compounds, and said conditions include a reaction temperature of between 300 and 400°C.

10. The process of claim 9, wherein the halogenated organic compounds are selected from the group consisting of chlorobenzodioxins, polybromobiphenyls, polychlorobiphenyls, dichloromethane, chloroform, carbon tetrachloride, dichloroethylene, methylchloroform, chlorofluorocarbons, and combinations thereof.

11. The process of claim 10, wherein the material is selected from polychlorobiphenyls.

12. The process of claim 9, wherein in step (b) the specific reactant is sodium carbonate, the reaction temperature is 375°C to 400°C, and the gaseous oxidant is oxygen or air.

13. The process of claim 9, wherein in step (b) the pressure is between 20 and 170 atmospheres (about 2 to 17 MPa).

14. The process of claim 9, wherein in step (b) the specific reactant is present in at least a stoichiometric amount to the material.

15. The process of claim 1, further comprising the step of
(c) further degrading the compounds produced in step (b) by subsequent reaction to environmentally acceptable products.

## Patentansprüche

1. Verfahren zur Zersetzung von Material, das aus der Gruppe ausgewählt ist, die aus organischen Verbindungen, anorganischen Verbindungen und Kombinationen davon besteht, in Verbindungen, die umweltverträglich sind oder die einem weiteren Abbau durch herkömmliche Entsorgungssysteme unter Herstellung umweltverträglicher Produkte zugänglich sind, wobei dieses Verfahren umfaßt:
(a) Einbringen einer wäßrigen Lösung oder einer wäßrigen Aufschlämmung des zu zersetzenden Materials in eine Reaktionszone, die gegenüber den Zersetzungstemperaturen und -drücken beständig ist; und
(b) Kontaktieren des Materials in Anwesenheit von Wasser mit einem spezifischen Reaktanten, der als Feststoff in einer Menge vorhanden ist, die wirksam ist, um das Material unter Bedingungen einer heißen oder überkritischen Wasseroxidation zu zersetzen, wobei die Bedingungen eine Reaktionstemperatur von zwischen 300 und 450°C und einen Reaktionsdruck von zwischen 10 und 400 Atmosphären (etwa 1 bis 40,5 MPa) umfassen,
wobei der spezifische Reaktant in einem wäßrigen Medium bei den Bedingungen der heißen oder überkritischen Wasseroxidation zu mindestens etwa 90% unlöslich ist und umgesetzt wird, um jegliches Säuregas, das bei der Zersetzung hergestellt wird, zu neutralisieren,
wobei das Kontaktieren in Anwesenheit eines gasförmigen Oxidationsmittels über einen Reaktionszeitraum durchgeführt wird, der ausreicht, um etwa 99% oder mehr des Materials in Verbindungen, die umweltverträglich sind, oder in Umwandlungsverbindungen, die einem weiteren Abbau zugänglich sind, umzuwandeln.

2. Verfahren nach Anspruch 1, wobei in Stufe (b) die Temperatur zwischen 373° und 400°C und der Druck zwischen 100 und 300 Atmosphären (etwa 10 bis 30,5 MPa) ist.

3. Verfahren nach Anspruch 1, wobei der spezifische Reaktant aus der Gruppe ausgewählt ist, die aus Natriumcarbonat, Calciumcarbonat, Magnesiumcarbonat, Natriumbicarbonat, Calciumbicarbonat, Magnesiumbicarbonat und Kombinationen davon besteht.

4. Verfahren nach Anspruch 3, wobei der spezifische Reaktant Natriumcarbonat ist.

5. Verfahren nach Anspruch 1, wobei das gasförmige Oxidationsmittel aus der Gruppe ausgewählt ist, die aus Luft, Sauerstoff, Wasserstoffperoxid, Ozon und Kombinationen davon besteht.

6. Verfahren nach Anspruch 5, wobei das gasförmige Oxidationsmittel Sauerstoff oder Luft ist.

7. Verfahren nach Anspruch 6, wobei das Oxidationsmittel Sauerstoff ist.

8. Verfahren nach Anspruch 1, wobei das Oxidationsmittel in einer Menge von zwischen 0,1 und 50 Gew.-% des Materials vorhanden ist.

9. Verfahren nach Anspruch 1, wobei das Material unter halogenierten organischen Verbindungen ausgewählt ist und die Bedingungen eine Reaktionstemperatur von zwischen 300 und 400°C umfassen.

10. Verfahren nach Anspruch 9, wobei die halogenierten organischen Verbindungen aus der Gruppe ausgewählt sind, die aus Chlorbenzodioxinen, Polybrombiphenylen, Polychlorbiphenylen, Dichlormethan, Chloroform, Tetrachlorkohlenstoff, Dichlorethylen, Methylchloroform, Chlorfluorkohlenstoffen und Kombinationen davon besteht.

11. Verfahren nach Anspruch 10, wobei das Material unter Polychlorbiphenylen ausgewählt ist.

12. Verfahren nach Anspruch 9, wobei in Stufe (b) der spezifische Reaktant Natriumcarbonat ist, die Reaktionstemperatur 375°C bis 400°C ist und das gasförmige Oxidationsmittel Sauerstoff oder Luft ist.

13. Verfahren nach Anspruch 9, wobei in Stufe (b) der Druck zwischen 20 und 170 Atmosphären (etwa 2 bis 17 MPa) ist.

14. Verfahren nach Anspruch 9, wobei in Stufe (b) der spezifische Reaktant zum Material in mindestens stöchiometrischer Menge vorhanden ist.

15. Verfahren nach Anspruch 1, das zusätzlich die Stufe (c) umfaßt, in der die Verbindungen, die in Stufe (b) hergestellt werden, durch nachfolgende Reaktion in umweltverträgliche Produkte abgebaut werden.

## Revendications

1. Procédé de décomposition d'une matière choisie dans le groupe constitué par des composés organiques, des composés minéraux et des combinaisons de ceux-ci, en composés qui sont acceptables pour l'environnement, ou qui peuvent subir une dégradation ultérieure par des systèmes de mise au rebut classiques pour produire des produits acceptables pour l'environnement, procédé comprenant les étapes consistant à :
(a) transporter une solution aqueuse ou une suspension aqueuse de la matière à décomposer, dans une zone de réaction capable de supporter les températures et les pressions de la décomposition ; et
(b) mettre la matière en contact, en présence d'eau, avec un réactif spécifique présent sous forme solide en une quantité efficace pour décomposer la matière dans des conditions d'oxydation par l'eau chaude ou super-critique, lesdites conditions comprenant une température réactionnelle comprise entre 300 et 450°C et une pression réactionnelle comprise entre 10 et 400 atmosphères (environ 1 à 40,5 MPa),
dans lequel le réactif spécifique est au moins environ insoluble à 90 % dans un milieu aqueux dans lesdites conditions d'oxydation par l'eau chaude ou super-critique, et dans lequel le réactif réagit de façon à neutraliser tout gaz acide produit pendant la décomposition,
ladite mise en contact étant réalisée en présence d'un oxydant gazeux pendant une durée de réaction suffisante pour convertir environ 99 % ou plus de la matière en composés qui sont acceptables pour l'environnement, ou pour la convertir en composés qui peuvent subir une dégradation ultérieure.

2. Procédé selon la revendication 1, dans lequel dans l'étape (b) la température est comprise entre 373 et 400°C et la pression est comprise entre 100 et 300 atmosphères (environ 10 à 30,5 MPa).

3. Procédé selon la revendication 1, dans lequel le réactif spécifique est choisi dans le groupe constitué par le carbonate de sodium, le carbonate de calcium, le carbonate de magnésium, le bicarbonate de sodium, le bicarbonate de calcium, le bicarbonate de magnésium et des combinaisons de ceux-ci.

4. Procédé selon la revendication 3, dans lequel le réactif spécifique est le carbonate de sodium.

5. Procédé selon la revendication 1, dans lequel l'oxydant gazeux est choisi dans le groupe constitué par l'air, l'oxygène, le peroxyde d'hydrogène, l'ozone et des combinaisons de ceux-ci.

6. Procédé selon la revendication 5, dans lequel l'oxydant gazeux est l'oxygène ou l'air.

7. Procédé selon la revendication 6, dans lequel l'oxydant est l'oxygène.

8. Procédé selon la revendication 1, dans lequel l'oxydant est présent en une proportion comprise entre 0,1 et 50 % en poids de la matière.

9. Procédé selon la revendication 1, dans lequel la matière est choisie parmi les composés organiques halogénés, et lesdites conditions comprennent une température réactionnelle comprise entre 300 et 400°C.

10. Procédé selon la revendication 9, dans lequel les composés organiques halogénés sont choisis dans le groupe constitué par les chlorobenzodioxines, les polybromobiphényles, les polychlorobiphényles, le dichlorométhane, le chloroforme, le tétrachlorure de carbone, le dichloroéthylène, le méthylchloroforme, les chlorofluorocarbures et des combinaisons de ceux-ci.

11. Procédé selon la revendication 10, dans lequel la matière est choisie parmi les polychlorobiphényles.

12. Procédé selon la revendication 9, dans lequel dans l'étape (b) le réactif spécifique est le carbonate de sodium, la température réactionnelle est de 375°C à 400°C et l'oxydant gazeux est l'oxygène ou l'air.

13. Procédé selon la revendication 9, dans lequel dans l'étape (b) la pression est comprise entre 20 et 170 atmosphères (environ 2 à 17 MPa).

14. Procédé selon la revendication 9, dans lequel dans l'étape (b) le réactif spécifique est présent au moins en une quantité stoechiométrique par rapport à la matière.

15. Procédé selon la revendication 1, comprenant en outre l'étape consistant à
(c) dégrader davantage les composés produits dans l'étape (b) par une réaction ultérieure en produits acceptables pour l'environnement.
